(19) Europäisches Patentamt
European Patent Office
Office européen des brevets

(11) **EP 4 596 114 A1**

(12) **EUROPEAN PATENT APPLICATION**

(43) Date of publication:
06.08.2025 Bulletin 2025/32

(21) Application number: 24216468.9

(22) Date of filing: 29.11.2024

(51) International Patent Classification (IPC):
**B05C 11/10** (2006.01)    **H01M 4/04** (2006.01)
**B05C 5/02** (2006.01)

(52) Cooperative Patent Classification (CPC):
**B05C 11/1005; B05C 11/1007; B05C 11/1013;
H01M 4/04; H01M 4/0404; H01M 4/0409;
H01M 4/139; B05C 5/0254**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 31.01.2024 KR 20240015110

(71) Applicant: Samsung SDI Co., Ltd.
Yongin-si, Gyeonggi-do 17084 (KR)

(72) Inventors:
• **Sohn, Myungbeom**
Yongin-si, Gyeonggi-do 17084 (KR)
• **Son, Taeyoung**
Yongin-si, Gyeonggi-do 17084 (KR)
• **Chung, Jeahyun**
Yongin-si, Gyeonggi-do 17084 (KR)

(74) Representative: **Gulde & Partner**
**Patent- und Rechtsanwaltskanzlei mbB**
**Berliner Freiheit 2**
**10785 Berlin (DE)**

(54) **APPARATUS AND METHOD FOR MANUFACTURING ELECTRODE OF SECONDARY BATTERY**

(57) An apparatus for manufacturing an electrode of a secondary battery, includes: a storage unit configured to store a slurry; a die coater connected to the storage unit, and to discharge the slurry onto a substrate; a supply unit connected to the storage unit and the die coater, and to supply the slurry from the storage unit to the die coater; a slurry measuring unit to measure a density of the slurry supplied from the supply unit; and a controller to control the supply unit based on the density of the slurry transmitted from the slurry measuring unit.

FIG. 2

**Description**

**BACKGROUND**

**1. Field**

Aspects of embodiments of the present disclosure relate to an apparatus and a method for manufacturing an electrode of a secondary battery.

**2. Description of the Related Art**

Secondary batteries are rechargeable batteries that are designed to be discharged and recharged multiple times. Such secondary batteries are commonly used in various applications, such as electronic devices (e.g., smart phones, laptops, tablets, and the like), electric vehicles, solar power generation, and emergency power supplies. For example, lithium-ion batteries are widely used in various electronic products and electric vehicles due to their high energy density and high charge/discharge efficiency.

A secondary battery is manufactured by inserting an electrode assembly including a positive electrode plate, a negative electrode plate, and a separator into a case and sealing the case with a cap plate. The electrode plates are manufactured by applying a slurry onto a substrate. For example, the positive electrode plate is manufactured by applying a slurry for a positive electrode active material onto a substrate and the negative electrode plate is manufactured by applying a slurry for a negative electrode active material onto the substrate. Depending on the characteristics of the electrode plates used by the secondary battery, the amount of slurry applied onto the substrate may vary. Accordingly, an efficient method to control the amount of slurry applied onto the substrate may be desired.

The above information disclosed in this Background section is for enhancement of understanding of the background of the present disclosure, and therefore, it may contain information that does not constitute related (or prior) art.

**SUMMARY**

Embodiments of the present disclosure may be directed to an apparatus and a method for manufacturing an electrode of a secondary battery.

According to some embodiments of the present disclosure, before the slurry is applied onto the substrate, the flow rate of the slurry can be controlled. Therefore, costs of the manufacturing process for the electrode of the secondary battery may be reduced.

These and other aspects and features of the present disclosure will be described in or will be apparent from the following description of embodiments of the present disclosure.

According to one or more embodiments of the present disclosure, an apparatus for manufacturing an electrode of a secondary battery is provided, including: a storage unit configured to store a slurry; a die coater connected to the storage unit, and configured to discharge the slurry onto a substrate; a supply unit connected to the storage unit and the die coater, and configured to supply the slurry from the storage unit to the die coater; a slurry measuring unit configured to measure a density of the slurry supplied from the supply unit; and a controller configured to control the supply unit based on the density of the slurry measured by the slurry measuring unit.

According to one or more embodiments of the present disclosure, an apparatus for manufacturing an electrode of a secondary battery, includes: a storage unit to store a slurry; a die coater connected to the storage unit, and configured to discharge the slurry onto a substrate; a supply unit connected to the storage unit and the die coater, and configured to supply the slurry from the storage unit to the die coater; a slurry measuring unit configured to measure a density and a flow rate of the slurry supplied from the supply unit; and a controller configured to control the supply unit based on the density and the flow rate of the slurry transmitted from the slurry measuring unit.

In an embodiment, the supply unit may include a pump and a pulsation dampener, the controller may be configured to calculate a target flow rate based on a solid weight ratio of the slurry and the density of the slurry transmitted from the slurry measuring unit, and the controller may be configured to control the pump based on the target flow rate.

In an embodiment, the supply unit may include a supply control valve connected to the die coater, and the controller may be configured to control an opening and a closing of the supply control valve.

In an embodiment, the supply unit may include a supply control valve connected to the die coater, and a circulation control valve connected to the supply control valve and the storage unit.

In an embodiment, the controller may be configured to control the circulation control valve to adjust an amount of the slurry returning to the storage unit.

In an embodiment, the apparatus may further include a drying apparatus configured to dry the slurry discharged onto the substrate.

In an embodiment, the apparatus may further include a coating quality meter configured to measure a thickness and a density of the slurry discharged onto the substrate.

In an embodiment, the controller may be configured to control the supply unit based on the thickness and the density of the slurry measured by the coating quality meter.

In an embodiment, the slurry measuring unit may include a flow meter and a density meter, the flow meter may include at least one of a Coriolis flowmeter, an ultrasonic flowmeter, or an electromagnetic flowmeter, and the density meter may include at least one of a vibrational density meter or a capacitive density meter.

According to one or more embodiments of the present disclosure, a method for manufacturing an electrode of a secondary battery, includes: measuring a density of a slurry to be supplied to a die coater; obtaining a solid weight ratio of the slurry; calculating a target flow rate based on the density of the slurry and the solid weight ratio of the slurry; and controlling a supply of the slurry based on the target flow rate.

In an embodiment, the calculating of the target flow rate may include calculating the target flow rate based on $Q = (LL * W * V) / (SC * \rho)$, where $Q$ may be the target flow rate, $LL$ may be a target application amount, $W$ may be a coating width of the slurry, $V$ may be a coating speed of the slurry, $SC$ may be the solid weight ratio of the slurry, and $\rho$ may be the density of the slurry.

In an embodiment, the obtaining of the solid weight ratio of the slurry may include: collecting the slurry; drying the collected slurry; and measuring the solid weight ratio of the slurry.

In an embodiment, the obtaining of the solid weight ratio of the slurry may include: acquiring a mixing ratio of the slurry; and estimating the solid weight ratio of the slurry in a database based on the mixing ratio of the slurry.

In an embodiment, the method may further include: measuring a flow rate of the slurry; and discharging the slurry onto a substrate in response to the flow rate of the slurry corresponding to the target flow rate.

In an embodiment, the method may further include drying the slurry discharged onto the substrate.

In an embodiment, the method may further include: measuring a flow rate of the slurry; and controlling a rate of the supply when the flow rate of the slurry does not correspond to the target flow rate.

According to one or more embodiments of the present disclosure, a method for manufacturing an electrode of a secondary battery, the method comprising: measuring a density of a slurry to be supplied to a die coater; controlling a supply of the slurry based on the measured density.

According to one or more embodiments of the present disclosure, a method for manufacturing an electrode of a secondary battery, includes: setting a coating width, a coating speed, and a target application amount of a coating apparatus; measuring a density of a slurry to be supplied to a die coater from a supply unit; obtaining a solid weight ratio of the slurry; calculating a target flow rate of the slurry; controlling the supply unit based on the target flow rate; measuring a flow rate of the slurry; and determining whether to discharge the slurry onto a substrate based on the flow rate of the slurry and the target flow rate.

In an embodiment, the calculating of the target flow rate of the slurry may include calculating the target flow rate of the slurry based on the coating width, the coating speed, the target application amount, the density of the slurry, and the solid weight ratio of the slurry.

In an embodiment, the obtaining of the solid weight ratio of the slurry may include: collecting the slurry; drying the collected slurry; and measuring solid contents of the slurry.

In an embodiment, the obtaining of the solid weight ratio of the slurry may include: acquiring a mixing ratio of the slurry; and estimating solid contents of the slurry in a database based on the mixing ratio of the slurry.

According to some embodiments of the present disclosure, before the slurry is applied onto the substrate, the target flow rate of the slurry may be calculated, and the flow rate of the slurry may be controlled. Therefore, costs of the manufacturing process for the electrode of the secondary battery may be reduced.

However, aspects and features of the present disclosure are not limited to those described above, and other aspects and features not mentioned will be clearly understood by a person skilled in the art from the detailed description, described below.

## BRIEF DESCRIPTION OF DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:

FIG. 1 is a block diagram illustrating an apparatus for manufacturing an electrode of a secondary battery according to some embodiments of the present disclosure;

FIG. 2 is a schematic diagram illustrating a coating apparatus according to some embodiments of the present disclosure;

FIG. 3 is a schematic diagram illustrating a coating apparatus according to some embodiments of the present disclosure;

FIG. 4 is a block diagram illustrating a slurry measuring unit according to some embodiments of the present disclosure;

FIG. 5 is a diagram illustrating a method of calculating a target flow rate for a coating apparatus according to some embodiments of the present disclosure;

FIG. 6 is a graph illustrating a method for controlling a flow rate of a slurry using a coating apparatus according to a comparable embodiment;

FIG. 7 is a graph illustrating a method for controlling a flow rate of a slurry using a coating apparatus according to an embodiment of the present disclosure;

FIG. 8 is a diagram illustrating a secondary battery including an electrode manufactured using an apparatus for manufacturing an electrode of a secondary battery according to some embodiments of the present disclosure;

FIG. 9 is a flowchart illustrating a method for manufacturing an electrode of a secondary battery according to some embodiments of the present disclosure; and

FIG. 10 is a flowchart illustrating a method for manufacturing an electrode of a secondary battery according to some embodiments of the present disclosure.

## DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

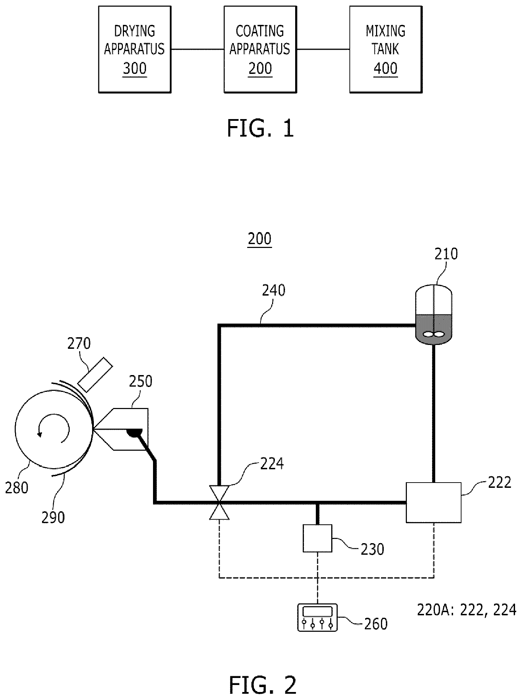

FIG. 1 is a block diagram illustrating an apparatus for manufacturing an electrode of a secondary battery according to some embodiments of the present disclosure.

Referring to FIG. 1, the apparatus for manufacturing the electrode of the secondary battery according to some embodiments may include a coating apparatus 200. The apparatus for manufacturing the electrode may further include a drying apparatus 300 and/or a mixing tank 400.

In the mixing tank 400, a slurry for manufacturing an electrode of a secondary battery may be prepared and stored. The slurry may be prepared by mixing a solvent, an active material, a conductive agent, and a binder with each other. For example, the slurry may include a slurry for a positive electrode active material or a slurry for a negative electrode active material. The slurry stored in the mixing tank 400 may be supplied to the coating apparatus 200 through a connection pipe.

For example, the positive electrode active material may include a compound (lithiated intercalation compound) that is capable of intercalating and deintercalating lithium. Specifically, at least one of a composite oxide of lithium and a metal selected from cobalt, manganese, nickel, and combinations thereof may be used.

The composite oxide may be a lithium transition metal composite oxide. Specific examples of the composite oxide may include lithium nickel-based oxide, lithium cobalt-based oxide, lithium manganese-based oxide, lithium iron phosphate-based compound, cobalt-free nickel-manganese-based oxide, or a combination thereof.

As an example, the following compounds represented by any one of the following Chemical Formulas may be used. $Li_aA_{1-b}X_bO_{2-c}D_c$ ($0.90 \leq a \leq 1.8$, $0 \leq b \leq 0.5$, and $0 \leq c \leq 0.05$); $Li_aMn_{2-b}X_bO_{4-c}D_c$ ($0.90 \leq a \leq 1.8$, $0 \leq b \leq 0.5$, and $0 \leq c \leq 0.05$); $Li_aNi_{1-b-c}Co_bX_cO_2-\alpha D_\alpha$ ($0.90 \leq a \leq 1.8$, $0 \leq b \leq 0.5$, $0 \leq c \leq 0.5$, and $0 < \alpha < 2$); $Li_aNi_{1-b-c}Mn_bX_cO_2-\alpha D_\alpha$ ($0.90 \leq a \leq 1.8$, $0 \leq b \leq 0.5$, $0 \leq c \leq 0.5$, and $0 < \alpha < 2$); $Li_aNi_bCo_cL1_dGeO_2$ ($0.90 \leq a \leq 1.8$, $0 \leq b \leq 0.9$, $0 \leq c \leq 0.5$, $0 \leq d \leq 0.5$, and $0 \leq e \leq 0.1$); $Li_aNiG_bO_2$ ($0.90 \leq a \leq 1.8$ and $0.001 \leq b \leq 0.1$); $Li_aCoG_bO_2$ ($0.90 \leq a \leq 1.8$ and $0.001 \leq b \leq 0.1$); $Li_aMn_{1-b}G_bO_2$ ($0.90 \leq a \leq 1.8$ and $0.001 \leq b \leq 0.1$); $Li_aMn_2G_bO_4$ ($0.90 \leq a \leq 1.8$ and $0.001 \leq b \leq 0.1$); $Li_aMn_{1-g}G_gPO_4$ ($0.90 \leq a \leq 1.8$ and $0 \leq g \leq 0.5$); $Li_{(3-f)}Fe_2(PO_4)_3$ ($0 \leq f \leq 2$); or $LiaFePO_4$ ($0.90 \leq a \leq 1.8$).

In the above Chemical Formulas, A is Ni, Co, Mn, or a combination thereof; X is Al, Ni, Co, Mn, Cr, Fe, Mg, Sr, V, a rare earth element or a combination thereof; D is O, F, S, P, or a combination thereof; G is Al, Cr, Mn, Fe, Mg, La, Ce, Sr, V, or a combination thereof; and L1 is Mn, Al, or a combination thereof.

The positive electrode active material may be, for example, a high nickel-based positive electrode active material having a nickel content of greater than or equal to about 80 mol%, greater than or equal to about 85 mol%, greater than or equal to about 90 mol%, greater than or equal to about 91 mol%, or greater than or equal to about 94 mol% and less than or equal to about 99 mol% based on 100 mol% of the metal excluding lithium in the lithium transition metal composite oxide. The high-nickel-based positive electrode active material may be capable of realizing high capacity and can be applied to a high-capacity, high-density rechargeable lithium battery.

The positive electrode active material may be used to manufacture a positive electrode for a lithium secondary battery. A positive electrode for a rechargeable lithium battery may include a current collector and a positive electrode active material layer on the current collector. The positive electrode active material layer may include a positive electrode active material and may further include a binder and/or a conductive material (e.g., an electrically conductive material).

For example, the positive electrode may further include an additive that can serve as a sacrificial positive electrode.

An amount of the positive electrode active material may be about 90 wt% to about 99.5 wt% based on 100 wt% of the positive electrode active material layer. Amounts of the binder and the conductive material may be about 0.5 wt% to about 5 wt%, respectively, based on 100 wt% of the positive electrode active material layer.

The binder serves to attach the positive electrode active material particles well to each other and also to attach the positive electrode active material well to the current collector. Examples of the binder may include polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like, as non-limiting examples.

The conductive material may be used to impart conductivity (e.g., electrical conductivity) to the electrode. Any material that does not cause chemical change (e.g., does not cause an undesirable chemical change in the rechargeable lithium battery) and conducts electrons can be used in the battery. Examples of the conductive material may include a carbon-based material such as natural graphite, artificial graphite, carbon black, acetylene black, ketjen black, a carbon fiber, a carbon nanofiber, and carbon nanotube; a metal-based material containing copper, nickel, aluminum, silver, etc., in a form of a metal powder or a metal fiber; a conductive polymer such as a polyphenylene derivative; or a mixture thereof.

Al may be used as the current collector, but is not limited thereto.

The negative electrode active material may include a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, such as, for example, crystalline carbon, amorphous carbon or a combination thereof. The crystalline carbon may be graphite such as non-shaped, sheet-shaped, flake-shaped, sphere-shaped, or fiber-shaped natural graphite or artificial graphite. The amorphous carbon may be a soft carbon, a hard carbon, a mesophase pitch carbonization product, calcined coke, or the like.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The negative electrode active material may be used to manufacture a negative electrode for a lithium secondary battery. The negative electrode for a rechargeable lithium battery may include a current collector and a negative electrode active material layer on the current collector. The negative electrode active material layer may include a negative electrode active material, and may further include a binder and/or a conductive material (e.g., an electrically conductive material).

For example, the negative electrode active material layer may include about 90 wt% to about 99 wt% of the negative electrode active material, about 0.5 wt% to about 5 wt% of the binder, and about 0 wt% to about 5 wt% of the conductive material.

The binder may serve to attach the negative electrode active material particles well to each other and also to attach the negative electrode active material well to the current collector. The binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrine, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resins, polyvinyl alcohol, and a combination thereof.

When an aqueous binder is used as the negative electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include Na, K, or Li.

The dry binder may be a polymer material that is capable of being fibrous. For example, the dry binder may be polytetrafluoroethylene, polyvinylidene fluoride, a polyvinylidene fluoride-hexafluoropropylene copolymer, polyethylene oxide, or a combination thereof.

The conductive material may be used to impart conductivity (e.g., electrical conductivity) to the electrode. Any material that does not cause chemical change (e.g., does not cause an undesirable chemical change in the rechargeable lithium battery) and that conducts electrons can be used in the battery. Non-limiting examples thereof may include a carbon-based material such as natural graphite, artificial graphite, carbon black, acetylene black, ketjen black, a carbon fiber, a carbon nanofiber, and a carbon nanotube; a metal-based material including copper, nickel, aluminum, silver, etc. in a form of a metal powder or a metal fiber; a conductive polymer such as a polyphenylene derivative; or a mixture thereof.

The negative current collector may include a copper foil, a nickel foil, a stainless steel foil, a titanium foil, a nickel foam, a copper foam, a polymer substrate coated with a conductive metal, or a combination thereof.

The coating apparatus 200 may perform a coating process by applying the slurry supplied from the mixing tank 400 onto a substrate. The coating apparatus 200 may include a slurry measuring unit (e.g., a slurry measurer or a slurry measuring device) that measures a density of the slurry. The slurry measuring unit (e.g., a slurry measurer or a slurry measuring device) may further measure a flow rate of the slurry. The coating apparatus 200 may further include a controller that controls a supply unit (e.g., a supplier or a supply device) of the coating apparatus 200 based on the density of the slurry or additionally based on the measured flow rate. Therefore, before the slurry is applied onto the substrate, the flow rate of the slurry can be controlled based on the density of the slurry. The configuration of the coating apparatus 200 will be described in more detail below with reference to FIG. 2

The drying apparatus 300 may be provided to dry the slurry coated on a surface of the substrate to form an active material layer. The drying apparatus 300 may be a drying apparatus 300 used in the coating apparatus 200 or separately provided. For example, the drying apparatus 300 may be disposed behind a die coater in a direction in which the substrate travels such that a slurry-coated electrode plate may be introduced into the drying apparatus 300. As the electrode plate passes through the drying apparatus 300, the solvent in the slurry may be volatilized due to hot air discharged from the drying apparatus 300. The drying apparatus 300 may be formed to have a sufficient length to allow the slurry to be completely dried. The drying apparatus 300 may be used in a wet process, but the present disclosure is not limited thereto. For example, in a case where the electrode is manufactured through a dry process, the coating apparatus 200 and the mixing tank 400 may be used to manufacture the electrode of the secondary battery without using the drying apparatus 300.

FIG. 2 is a schematic diagram illustrating a coating apparatus according to some embodiments of the present disclosure. As well, FIG. 2 describes an apparatus for manufacturing an electrode of a secondary battery.

Referring to FIG. 2, a coating apparatus 200 may include a storage unit (e.g., a storage tank) 210, a supply unit (e.g., a supplier or a supply device) 220A, a slurry measuring unit (e.g., a slurry measurer or a slurry measuring device) 230, a circulation pipe 240, a die coater 250, a coating quality meter 270, and a backup roll 280.

As used herein, the term "connected" may indicate that the components are directly connected to each other, or the components are connected to each other through separate connection pipes. For example, when the storage unit 210 is described as being connected to the supply unit 220A, a port of the storage unit 210 and a port of the supply unit 220A may be directly connected to each other, or the storage unit 210 and the supply unit 220A may be connected to each other through a connection pipe or through the connection pipe and additional components (e.g., a flow control valve, a pump, and the like).

The storage unit 210 may store a slurry. For example, the storage unit 210 may receive and store a slurry that is prepared in a mixing tank (e.g., the mixing tank 400 shown in FIG. 1). The storage unit 210 may include a receiving space (e.g., a slurry storage tank). An outlet of the storage unit 210 may be connected to the supply unit 220A. In some embodiments, the storage unit 210 may further include a mixer within the receiving space. The mixer may mix the slurry to maintain a constant or substantially constant viscosity of the slurry within the receiving space.

The supply unit 220A may include a slurry pump 222. The supply unit 220A may further include a circulation control valve 224. The slurry supplied from the storage unit 210 may be supplied to the die coater 250 via the supply unit 220A. The controller 260 may control the supply unit 220A to supply the slurry supplied from the storage unit 210 to the die coater 250, or to return the slurry back to the storage unit 210.

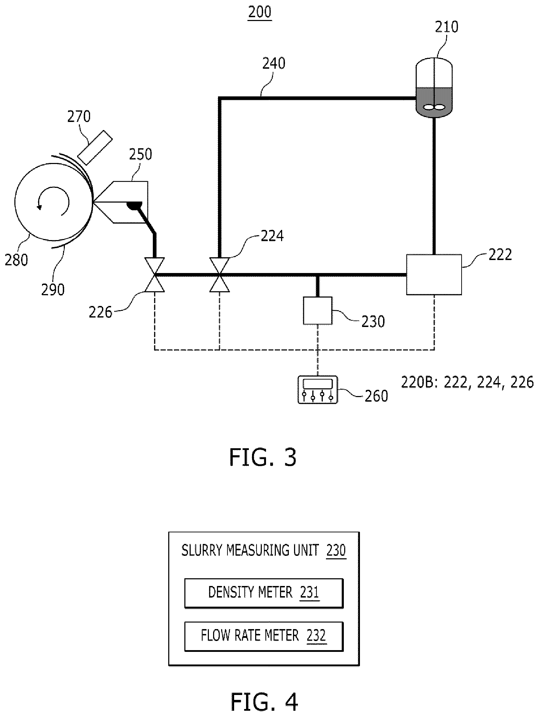

An inlet of the slurry pump 222 may be connected to the outlet of the storage unit 210. An outlet of the slurry pump 222 may be connected to an inlet of the circulation control valve 224. The slurry pump 222 may supply the slurry stored in the storage unit 210 to the die coater 250. For example, the slurry pump 222 may supply the slurry to the die coater 250 via the circulation control valve 224. In some embodiments, the slurry pump 22 may supply the slurry to the die coater 250 via the circulation control valve 224 and a supply control valve 226 (e.g., see FIG. 3).

In some embodiments, the slurry pump 222 may include a pump, and a pulsation dampener to reduce a pulsation of the pump. For example, the pump may include at least one of a diaphragm pump, a gear pump, a plunger pump, or a peristaltic pump. The pulsation dampener may include an air chamber or an accumulator. However, the present disclosure is not limited thereto.

The inlet of the circulation control valve 224 may be connected to the outlet of the slurry pump 222. A first outlet of the circulation control valve 224 may be connected to an inlet of the storage unit 210 through the circulation pipe 240. A second outlet of the circulation control valve 224 may be connected to an inlet of the die coater 250.

The circulation control valve 224 may control an amount of slurry supplied to the die coater 250, and an amount of slurry returning back to the storage unit 210. In an example, when the second outlet of the circulation control valve 224 is closed and the first outlet of the circulation control valve 224 is opened, the slurry supplied from the slurry pump 222 may be returned to the storage unit 210 through the circulation pipe 240. In another example, when the first outlet of the circulation control valve is closed and the second outlet of the circulation control valve is opened, the slurry supplied from the slurry pump 222 may be supplied to the die coater 250. In another example, when both of the first outlet and the second outlet of the circulation control valve 224 are opened, the amount of slurry supplied to the die coater 250 from the slurry pump 222 may be adjusted based on the opening ratio of the first outlet and the second outlet.

The slurry measuring unit 230 may be arranged to be connected to the supply unit 220A. For example, the slurry measuring unit 230 may be disposed between the slurry pump 222 and the circulation control valve 224. The slurry measuring unit 230 may measure properties of the slurry. For example, the measuring unit 230 may measure properties of the slurry moving from the slurry pump 222 to the circulation control valve 224, and transmit the measured data to the controller 260. For example, the slurry measuring unit 230 may measure the density of the slurry. In addition, the slurry measuring unit 230 may measure the flow rate of the slurry. However, the present disclosure is not limited thereto. For example, the slurry measuring unit 230 may be disposed in the circulation pipe 240, or at any suitable location where the slurry returning to the storage unit 210 can be measured.

The controller 260 may receive or obtain a solid weight ratio of the slurry from an external source or may measure, e.g. determine, a solid weight ratio of the slurry. As another example, the solid weight ratio of the slurry may correspond to a desired value (e.g., a predetermined value). As used in the present disclosure, "the solid weight ratio of the slurry" (e.g., a solid weight % of the slurry) may be defined by the following Equation 1.

Equation 1:

$$\text{Solid weight ratio of slurry} = M_{solid} / (M_{solvent} + M_{solid}).$$

In Equation 1, $M_{solid}$ is the weight of solid contained in a unit volume (1 cm$^3$) of the slurry, and $M_{Solvent}$ is the weight of solvent contained in a unit volume (1 cm$^3$) of slurry. The solid may correspond to any suitable solid (e.g., an active material, a binder, a conductive agent, and the like) contained in the slurry other than the solvent.

For example, if the solvent is N-Menthyl-2-Pyrrolidone (NMP), the $M_{solvent}$ may correspond to the weight of NMP ($M_{NMP}$). While NMP is described as an example of the solvent, other solvents may also be used.

Further, the density of the slurry may be defined by the following Equation 2.

Equation 2:

$$\text{Density of slurry} = (M_{solid} + M_{solvent}) / 1 \text{ cm}^3 \text{ of slurry}.$$

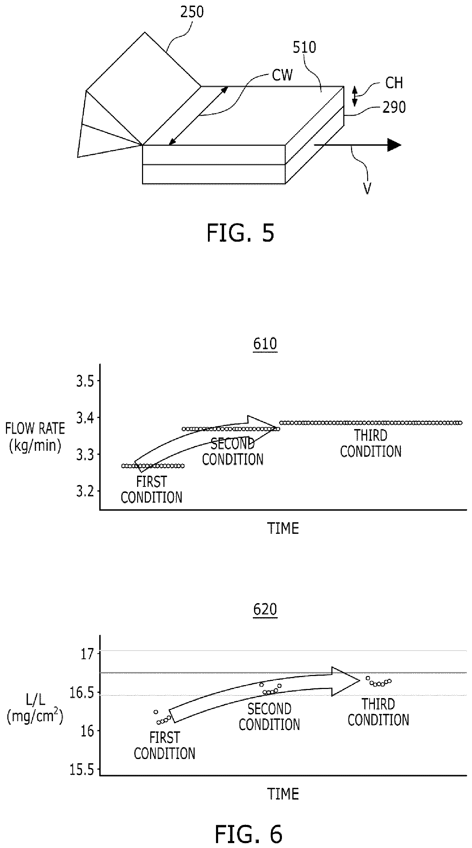

The controller 260 may calculate a target flow rate based on the density of the slurry received from the slurry measuring unit 230, and may include the solid weight ratio of the slurry. The controller 260 may control the supply unit 220A based on the calculated target flow rate. Thus, the coating process may be performed precisely and with efficiency, and costs of the manufacturing process for the electrode of the secondary battery may be reduced. For example, the controller 260 may control a rotational speed (revolutions per minute (RPM)) of the slurry pump 222 based on the calculated target flow rate. Based on the target flow rate and the flow rate of the slurry, the controller 260 may adjust the opening ratio of the circulation control valve 224, and the amount of slurry returning to the storage unit 210. A method for calculating the target flow rate by the controller 260 will be described in more detail below with reference to FIG. 5.

In some embodiments, the slurry measuring unit 230 may obtain the solid weight ratio of the slurry. The solid weight ratio of the slurry may include a measured solid contents of the slurry and an estimated solid contents of the slurry. For example, the slurry measuring unit 230 may collect the slurry supplied from the supply unit 220A, and dry the collected slurry to estimate the solid contents of the slurry. In another example, the controller 260 may estimate the solid contents of the slurry based on a mixing ratio of the components of the slurry. However, the present disclosure is not limited thereto.

In some embodiments, the controller 260 may control the supply unit 220A, e.g. the circulation control valve 224, to return the slurry to the storage unit 210, if the flow rate of the slurry measured by the slurry measuring unit 230 does not match the target flow rate. On the other hand, the controller 260 may control the supply unit 220A, e.g. the circulation control valve 224, to supply the slurry to the die coater 250, if the flow rate of the slurry measured by the slurry measuring unit 230 matches the target flow rate.

In some embodiments, the controller 260 may receive data of a coating layer from the coating quality meter 270, e.g., of the slurry discharged onto the substrate 290. For example, the controller 260 may receive a thickness and a width of the coating layer, e.g. the slurry, coated on the substrate 290 from the coating quality meter 270. Based on the received data, the controller 260 may control the supply unit 220A.

The inlet of the die coater 250 may be connected to the second outlet of the circulation control valve 224. The die coater 250 may be disposed to be spaced apart from the surface of the substrate 290. The die coater 250 may include a spray nozzle formed in a slit shape. The slurry may be ejected through the spray nozzle of the die coater 250 to apply the slurry onto the substrate 290. For example, as the backup roll 280 rotates, the substrate 290 may be provided on the die coater 250, and the slurry may be applied onto the surface of the substrate 290.

In some embodiments, the die coater 250 may include a gap adjustment module (e.g., a gap adjuster). The gap adjustment module may adjust a gap between an upper part and a lower part of the spray nozzle to thereby control the amount of ejecting slurry.

FIG. 3 is a schematic diagram illustrating a coating apparatus according to some embodiments of the present disclosure. For convenience, the components and configurations illustrated in FIG. 3 will be described in more detail hereinafter focusing on the differences from those described above with reference to FIG. 2, and redundant description may not be repeated.

Referring to FIG. 3, a supply unit (e.g., a supplier or a supply device) 220B may include a slurry pump 222, a circulation control valve 224, and a supply control valve 226. Slurry supplied from the storage unit 210 may be supplied to the die coater 250 via the supply unit 220B. The controller 260 may control the supply unit 220B to supply the slurry supplied from the storage unit 210 to the die coater 250, or to return the slurry back to the storage unit 210.

An inlet of the slurry pump 222 may be connected to an outlet of the storage unit 210. An outlet of the slurry pump 222 may be connected to an inlet of the circulation control valve 224. The slurry pump 222 may supply the slurry stored in the storage unit 210 to the die coater 250. For example, the slurry pump 222 may supply the slurry to the die coater 250 via the circulation control valve 224 and the supply control valve 226.

The inlet of the circulation control valve 224 may be connected to the outlet of the slurry pump 222. A first outlet of the circulation control valve 224 may be connected to an inlet of the storage unit 210 through a circulation pipe 240. A second outlet of the circulation control valve 224 may be connected to an inlet of the supply control valve 226.

The circulation control valve 224 may control an amount of slurry returning to the storage unit 210. In an example, the circulation control valve 224 may return the slurry supplied from the slurry pump 222 to the storage unit 210 if the supply control valve 226 is closed. In other words, the slurry may flow back to the storage unit 210 through the circulation pipe 240 connected to the first outlet of the circulation control valve 224. For example, when the supply control valve 226 is opened, and both the first outlet and the second outlet of the circulation control valve 224 are opened to allow the same flow rate of the slurry to pass therethrough, 50% of the amount of slurry supplied from the slurry pump 222 may be returned to the storage unit 210, while the remaining 50% may be supplied to the supply control valve 226. The circulation control valve 224 may control a pressure of the slurry before and after the supply control valve 226 to maintain a constant or substantially constant pressure. By maintaining the constant or substantially constant pressure of the slurry before and after the supply control valve 226, the amount of slurry supplied to the die coater 250 may be maintained to be constant or substantially constant.

The inlet of the supply control valve 226 may be connected to the outlet of the circulation control valve 224. An outlet of the supply control valve 226 may be connected to an inlet of the die coater 250. The supply control valve 226 may be opened and closed by the controller 260. By opening or closing the supply control valve 226, an amount of slurry supplied to the die coater 250 and a supply duration of slurry supplied to the die coater 250 may be controlled. The controller 260 may control the opening and closing of the supply control valve 226 based on the target flow rate and the flow rate of the slurry.

FIG. 4 is a block diagram illustrating a slurry measuring unit (e.g., a slurry measurer or a slurry measuring device) according to some embodiments of the present disclosure. Referring to FIG. 4, the slurry measuring unit 230 may include a density meter 231 and may further include a flow rate meter 232.

The density meter 231 may measure the weight per unit volume of the slurry passing through the pipe. For example, the density meter 231 may include at least one of a vibrational density meter or a capacitive density meter. However, the present disclosure is not limited thereto.

The flow meter 232 may measure the volume per unit time or the weight per unit time of the slurry passing through the pipe. For example, the flow meter 232 may include at least one of a Coriolis flowmeter, an ultrasonic flowmeter, or an electromagnetic flowmeter. However, the present disclosure is not limited thereto.

FIG. 5 is a diagram illustrating a method of calculating a target flow rate for a coating apparatus according to some embodiments of the present disclosure.

Referring to FIG. 5, a slurry may be applied onto a substrate 290 to form a pre-coating layer 510. The pre-coating layer 510 may refer to a coating layer prior to being introduced into a drying apparatus.

The controller of the coating apparatus may receive a density of the slurry or may further receive a flow rate of the slurry from the slurry measuring unit. Further, the controller may receive or measure a solid weight ratio of the slurry. The controller of the coating apparatus may calculate a target flow rate based on the density of the slurry, the solid weight ratio of the slurry, the coating width of the slurry, and the coating speed of the slurry. The target flow rate may be calculated based on the following Equation 3.

Equation 3:

$$Q = (LL * W * V) / (SC * \rho).$$

In Equation 3, Q is the target flow rate, and LL is a target application amount, which may refer to a desired amount of slurry applied onto the substrate 290. The target application amount may be the amount of slurry that remains on the substrate after drying. The target application amount may be a configurable value (e.g., a set value) that varies depending on the kind of secondary battery and the kind of slurry. In Equation 3, W is the coating width of the slurry, which may be a value configured (e.g., set) in the coating apparatus, V is the coating speed of the slurry, which may be a value configured (e.g., set) in the coating apparatus, SC is the solid weight ratio of the slurry, and $\rho$ is the density of the slurry.

In some embodiments, the coating quality meter may measure a width (CW) and a thickness (CH) of the pre-coating layer 510. The coating quality meter may transmit data including the measured width (CW) and the measured thickness (CH) to the controller. The controller may calculate a volumetric flow rate based on the width (CW) and the thickness (CH) of the pre-coating layer 510, and the coating speed of the coating apparatus. The volumetric flow rate may be calculated based on the following Equation 4.

Equation 4:

$$\text{Volumetric flow rate} = CW * CH * V.$$

In some embodiments, the controller may control the supply unit based on the volumetric flow rate and the flow rate of the slurry measured by the slurry measuring unit. For example, if the volumetric flow rate is lower than the flow rate of the slurry, the amount of slurry supplied from the supply unit may be increased.

FIG. 6 is a graph illustrating a method for controlling a flow rate of a slurry using a coating apparatus according to a comparable embodiment.

Referring to FIG. 6, a first graph 610 and a second graph 620 illustrate the method for controlling the flow rate of the slurry using the coating apparatus according to the comparable embodiment. The first graph 610 shows a flow rate of the slurry over time, and the second graph 620 shows an application amount over time. The application amount may refer to an amount of slurry applied onto the substrate. A target application amount of the coating apparatus may be (e.g., may be set to) 16.75 mg/cm$^2$.

First, the slurry to be applied onto the substrate is prepared in a storage unit (e.g., a storage tank). The slurry is applied onto the substrate under a first condition (e.g., a flow rate of the slurry is 3.26 kg/min). The slurry applied onto the substrate is dried, and then an application amount of the slurry is measured and compared with the target application amount. The measured application amount under the first condition is 16.1 mg/cm$^2$, which is lower than the target application amount. Therefore, the flow rate of the slurry is adjusted to be increased.

Next, the slurry is applied onto the substrate under a second condition (e.g., a flow rate of the slurry is 3.38 kg/min). The slurry applied onto the substrate is dried, and then an application amount of the slurry is measured and compared to the target application amount. The measured application amount under the second condition is 16.6 mg/cm$^2$, which is lower than the target application amount. Therefore, the flow rate of the slurry is adjusted to be increased.

Next, the slurry is applied onto the substrate under a third condition (e.g., a flow rate of the slurry is 3.4 kg/min). The slurry applied onto the substrate is dried, and then an application amount of the slurry is measured and compared to the target application amount. The measured application amount under the third condition is 16.75 mg/cm$^2$, which falls within a tolerance range. Accordingly, the coating process may proceed while maintaining or substantially maintaining the flow rate of the slurry.

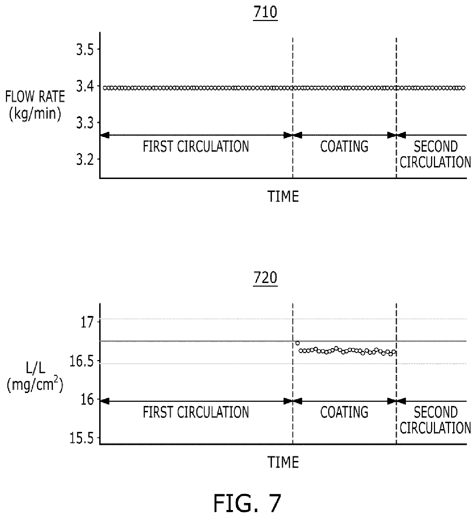

FIG. 7 is a graph illustrating a method for controlling a flow rate of a slurry using a coating apparatus according to an embodiment of the present disclosure.

Referring to FIG. 7, a first graph 710 and a second graph 720 illustrate the method for controlling the flow rate of the slurry using the coating apparatus according to embodiments of the present disclosure. The coating apparatus may correspond to the coating apparatus shown in FIG. 2 or FIG. 3.

The first graph 710 shows a flow rate of the slurry over time, and the second graph 720 shows an application amount over time. The application amount may refer to an amount of slurry applied onto the substrate. A target application amount of the coating apparatus may be (e.g., may be set to) 16.75 mg/cm$^2$.

First, no slurry is applied onto the substrate during a first circulation period. During the first circulation period, the slurry may not be discharged onto the substrate, and may be returned to the storage unit. The controller of the coating apparatus may calculate a target flow rate based on a density of the slurry and a solid weight ratio of the slurry measured by the slurry measuring unit. At this time, a coating speed of the coating apparatus may be 30 m/min, and a coating width may be (e.g., may be set to) 535.2 mm. The density of the slurry may be estimated to be 2.748 g/cm$^3$, and the solid weight ratio may be estimated to be 79 wt%. Using the target flow rate calculation method described above with reference to FIG. 4, the target flow rate of 3.393 kg/min is obtained. The controller controls the slurry pump to circulate the slurry until the flow rate of the circulating slurry reaches 3.393 kg/min.

Next, when the flow rate of the slurry reaches 3.393 kg/min, the controller controls the supply control valve to apply the slurry onto the substrate. The amount of the slurry applied onto the substrate during the coating period may be measured, and the application amount of the slurry may be measured to be 16.75 kg/cm$^2$. Upon completion of the coating process, the coating apparatus may stop applying the slurry, and may initiate a slurry return. For example, a second circulation period may be a period during which the slurry is returned after the coating process is completed.

The characteristics of the electrode may vary depending on the amount of slurry applied onto the substrate during the coating process. Therefore, depending on the product to be produced, the coating apparatus may reset the target application amount. The coating apparatus according to the comparable embodiment sets the flow rate of the slurry, measures the amount of slurry applied onto the substrate, compares it to the target application amount, and adjusts the flow rate of the slurry. As a result, the substrate and the slurry used until the target application amount is reached cannot be used in the manufacturing process for the electrode of the secondary battery.

On the other hand, the coating apparatus according to the embodiments of the present disclosure measures the density of the returning slurry, and calculates the target flow rate based on the density and/or the solid weight ratio of the slurry. The coating apparatus controls the supply unit until the target flow rate is reached, and after the target flow rate is reached, the slurry is discharged onto the substrate. As a result, the coating process may be performed without wasting the substrate and the slurry, and costs of the manufacturing process for the electrode of the secondary battery may be reduced. Furthermore, the aforementioned process may be automated by the controller, thereby increasing the efficiency of the manufacturing process for the electrode of the secondary battery.

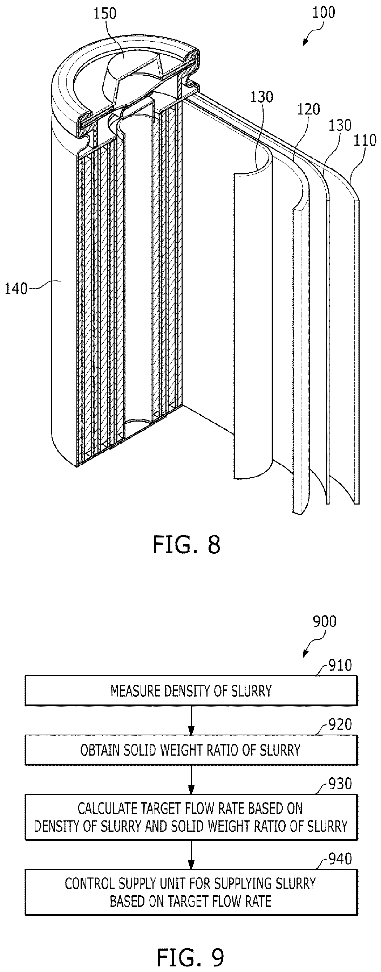

FIG. 8 is a diagram illustrating a secondary battery including an electrode manufactured using an apparatus for manufacturing an electrode of a secondary battery according to some embodiments of the present disclosure.

Referring to FIG. 8, a secondary battery 100 may include an electrode assembly, a case 140 accommodating the electrode assembly and an electrolyte therein, and a cap assembly 150 connected to (e.g., coupled to or attached to) an opening of the case 140 to seal the case 140.

The electrode assembly may include a first electrode 120, a second electrode 110, and a separator 130 disposed between the first electrode 120 and the second electrode 110. The electrode assembly may be wound, folded, or stacked to be accommodated in the case 140. FIG. 1 illustrates a structure of the case 140 having a cylindrical shape, but the present disclosure is not limited thereto. For example, the case 140 of the secondary battery 100 according to an embodiment of the present disclosure may have various suitable shapes, such as a cylindrical shape, a rectangular shape, a pouch shape, or a circular shape.

The first electrode 120 may include a first current collector, and a first active material layer formed on the first current collector. The first active material layer may be formed using the apparatus and the method for manufacturing the electrode of the secondary battery according to some embodiments of the present disclosure described herein. A first tab may be formed to extend outward from a first uncoated region of the first current collector where the first active material layer is not formed, and the first tab may be electrically connected to (e.g., coupled to or attached to) the cap assembly 150 or the case 140.

The second electrode 110 may include a second current collector, and a second active material layer formed on the second current collector. The second active material layer may be formed using the apparatus and the method for manufacturing the electrode of the secondary battery according to some embodiments of the present disclosure described herein. A second tab may be formed to extend outward from a second uncoated region of the second current collector where the second active material layer is not formed, and the second tab may be electrically connected to (e.g., coupled to or attached to) the case 140 or the cap assembly 150. In an embodiment, the first tab and the second tab may be formed to extend in opposite directions from each other. In other embodiments, the first tab and the second tab may be formed to extend in the same direction as each other.

In some embodiments, the first electrode 120 may serve as a positive electrode. In this case, the first current collector may be formed of, for example, an aluminum foil, and the first active material layer may include, for example, a transition metal oxide. The second electrode 110 may serve as a negative electrode. In this case, the second current collector may be formed of, for example, a copper foil or a nickel foil, and the second active material layer may include, for example, graphite.

In some embodiments, a plurality of secondary batteries 100 may be stacked to form a battery pack. The battery pack may be utilized in any suitable device that uses high capacity and high output, such as a laptop, a smartphone, an electric vehicle, and the like.

The secondary battery 100 may be a lithium secondary battery, a sodium secondary battery, or the like. However, the present disclosure is not limited thereto, and the secondary battery 100 may include any suitable kind of battery capable of repeatedly providing electrical power through charging and discharging operations. In an embodiment, in a case where the secondary battery 100 is a lithium secondary battery, the secondary battery 100 may be used in an electric vehicle (EV) because of its excellent life cycle and high rate performance. For example, the lithium secondary battery may be used in a hybrid vehicle, such as a plug-in hybrid electric vehicle (PHEV). The lithium secondary battery may also be used in applications that use large amounts of power storage. For example, the lithium secondary battery may be used in an electric bicycle, a power tool, and other similar applications.

FIG. 9 is a flowchart illustrating a method for manufacturing an electrode of a secondary battery according to some embodiments of the present disclosure. The method 900 for manufacturing the electrode of the secondary battery may be performed by an apparatus for manufacturing the electrode of the secondary battery according to some embodiments of the present disclosure.

Referring to FIG. 9, the slurry measuring unit may measure a density of a slurry (910). For example, the density of the slurry may be measured using the density meter in the slurry measuring unit. The measured density of the slurry may be transmitted to the controller.

A solid weight ratio of the slurry may be obtained (920). In some embodiments, the solid weight ratio of the slurry may be obtained by collecting the slurry, drying the collected slurry, and measuring the weight of the dried slurry. In some embodiments, the solid weight ratio of the slurry may be obtained by acquiring a mixing ratio of the slurry, and estimating the solid contents of the slurry in a database based on the mixing ratio of the slurry.

A target flow rate may be calculated based on the density of the slurry and the solid weight ratio of the slurry (930). The target flow rate may be calculated based on the Equation 3 described above.

Thereafter, the supply unit for supplying the slurry may be controlled based on the target flow rate (940). For example, the controller may control the slurry pump of the supply unit based on the target flow rate.

In some embodiments, the slurry measuring unit may measure a flow rate of the slurry supplied from the supply unit. In response to a case where the flow rate of the slurry matches the target flow rate, the controller may control the discharge of the slurry onto the substrate. Subsequently, the drying apparatus may be used to dry the slurry discharged onto the substrate.

In some embodiments, the slurry measuring unit may measure a flow rate of slurry supplied from the supply unit. The controller may control the supply unit in response to a case where the flow rate of the slurry does not match the target flow rate.

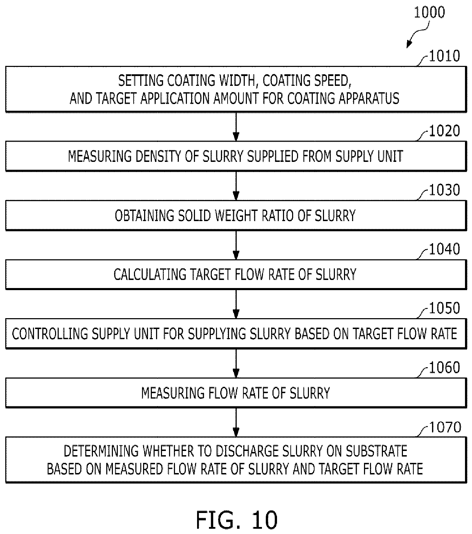

FIG. 10 is a flowchart illustrating a method for manufacturing an electrode of a secondary battery according to some embodiments of the present disclosure. The method 1000 for manufacturing the electrode of the secondary battery may be performed by an apparatus for manufacturing the electrode of the secondary battery according to some embodiments of the present disclosure.

Referring to FIG. 10, a coating width, a coating speed, and a target application amount for the coating apparatus may be set (1010). The slurry measuring unit may measure a density of the slurry supplied from the supply unit (1020). For example, the density of the slurry returning through the circulation pipe may be measured.

A solid weight ratio of the slurry may be obtained (1030). In some embodiments, the solid weight ratio of the slurry may be obtained by collecting the slurry, drying the collected slurry, and measuring the weight of the dried slurry. In some embodiments, the solid weight ratio of the slurry may be obtained by acquiring a mixing ratio of the slurry, and estimating the solid contents of the slurry in a database based on the mixing ratio of the slurry.

Thereafter, a target flow rate of the slurry may be calculated (1040). For example, the controller may calculate the target flow rate of the slurry based on the coating width, the coating speed, the target application amount of slurry, the density of the slurry, and the solid weight ratio of the slurry of the coating apparatus.

The controller may control the supply unit for supplying the slurry based on the target flow rate (1050). For example, the controller may adjust a rotational speed of the slurry pump based on the target flow rate. The slurry measuring unit may measure the flow rate of the slurry (1060). The controller may determine whether to discharge the slurry based on the measured flow rate of the slurry and the target flow rate (1070). For example, the controller may control the supply control valve to discharge the slurry, if the measured flow rate of the slurry matches the target flow rate.

Although the present disclosure has been described above with respect to embodiments thereof, the present disclosure is not limited thereto..

**[DESCRIPTION OF SOME REFERENCE SYMBOLS]**

| 200: | coating apparatus | 210: | storage unit |
|------|-------------------|------|--------------|
| 220A: | supply unit | 222: | slurry pump |
| 224: | circulation control valve | 226: | supply control valve |

(continued)

| | | | |
|---|---|---|---|
| 230: | slurry measuring unit | 240: | circulation pipe |
| 250: | die coater | 260: | controller |

**Claims**

1. An apparatus for manufacturing an electrode of a secondary battery, the apparatus comprising:

   a storage unit (210) configured to store a slurry;
   a die coater (250) connected to the storage unit (210), and configured to discharge the slurry onto a substrate (290);
   a supply unit (220A, 220B) connected to the storage unit (210) and the die coater (250), and configured to supply the slurry from the storage unit (210) to the die coater (250);
   a slurry measuring unit (230) configured to measure a density of the slurry supplied from the supply unit (220A, 220B); and
   a controller (260) configured to control the supply unit (220A, 220B) based on the density of the slurry measured by the slurry measuring unit (230).

2. The apparatus as claimed in claim 1, wherein the supply unit (220A, 220B) comprises a slurry pump (222),

   wherein the controller (260) is configured to calculate a target flow rate based on a solid weight ratio of the slurry and the density of the slurry measured by the slurry measuring unit (230), and
   wherein the controller (260) is configured to control the slurry pump (222) based on the calculated target flow rate.

3. The apparatus as claimed in one of the claims 1 to 2, wherein the supply unit (220B) comprises a supply control valve (226) connected to the die coater (250), and
   wherein the controller (260) is configured to control an opening and a closing of the supply control valve (226).

4. The apparatus as claimed in one of the claims 1 to 3, wherein the supply unit (220B) comprises a supply control valve (226) connected to the die coater (250), and a circulation control valve (224) connected to the supply control valve (226) and the storage unit (210).

5. The apparatus as claimed in claim 4, wherein the controller (260) is configured to control the circulation control valve (224) to adjust an amount of the slurry returning to the storage unit (210).

6. The apparatus as claimed in one of the claims 1 to 5, further comprising a drying apparatus (300) configured to dry the slurry discharged onto the substrate (290).

7. The apparatus as claimed in one of the claims 1 to 6, further comprising a coating quality meter (270) configured to measure a thickness and a density of the slurry discharged onto the substrate (290).

8. The apparatus as claimed in claim 7, wherein the controller (260) is configured to control the supply unit (220A, 220B) based on the thickness and the density of the slurry measured by the coating quality meter (270).

9. The apparatus as claimed in one of the claims 1 to 8, wherein the slurry measuring unit (230) comprises a flow meter (232) and/or a density meter (231),

   wherein the flow meter (232) comprises at least one of a Coriolis flowmeter, an ultrasonic flowmeter, or an electromagnetic flowmeter, and
   wherein the density meter (231) comprises at least one of a vibrational density meter or a capacitive density meter.

10. A method for manufacturing an electrode of a secondary battery, the method comprising:

    measuring (910) a density of a slurry to be supplied to a die coater (250);
    controlling (940) a supply of the slurry based on the measured density.

**11.** The method as claimed in claim 10, further comprising:

obtaining (920) a solid weight ratio of the slurry;
calculating (930) a target flow rate based on the density of the slurry and the solid weight ratio of the slurry; and
controlling (940) the supply of the slurry based on the target flow rate.

**12.** The method as claimed in claim 11, wherein the calculating (930) of the target flow rate comprises:
calculating the target flow rate based on $Q = (LL * W * V) / (SC * \rho)$, where $Q$ is the target flow rate, $LL$ is a target application amount, $W$ is a coating width of the slurry, $V$ is a coating speed of the slurry, $SC$ is the solid weight ratio of the slurry, and $\rho$ is the density of the slurry.

**13.** The method as claimed in one of the claims 11 to claim 12, wherein the obtaining (920) of the solid weight ratio of the slurry comprises:

collecting the slurry;
drying the collected slurry; and
measuring the solid weight ratio of the slurry.

**14.** The method as claimed in one of the claims 11 to 12, wherein the obtaining (920) of the solid weight ratio of the slurry comprises:

acquiring a mixing ratio of the slurry; and
estimating the solid weight ratio of the slurry in a database based on the mixing ratio of the slurry.

**15.** The method as claimed in one of the claims 11 to 14, further comprising:

measuring a flow rate of the slurry; and
discharging the slurry onto a substrate (290) in response to the flow rate of the slurry corresponding to the target flow rate,
and/or
controlling a rate of the supply when the flow rate of the slurry does not correspond to the target flow rate.

FIG. 1

220A: 222, 224

FIG. 2

200

210

240

270

250

224

222

280

290

226

230

220B: 222, 224, 226

260

FIG. 3

SLURRY MEASURING UNIT 230

DENSITY METER 231

FLOW RATE METER 232

FIG. 4

FIG. 5

610

FLOW RATE (kg/min)

TIME

620

L/L (mg/cm²)

TIME

FIG. 6

710

720

## FIG. 7

FIG. 8

FIG. 9

1000

1010

SETTING COATING WIDTH, COATING SPEED,
AND TARGET APPLICATION AMOUNT FOR COATING APPARATUS

1020

MEASURING DENSITY OF SLURRY SUPPLIED FROM SUPPLY UNIT

1030

OBTAINING SOLID WEIGHT RATIO OF SLURRY

1040

CALCULATING TARGET FLOW RATE OF SLURRY

1050

CONTROLLING SUPPLY UNIT FOR SUPPLYING SLURRY BASED ON TARGET FLOW RATE

1060

MEASURING FLOW RATE OF SLURRY

1070

DETERMINING WHETHER TO DISCHARGE SLURRY ON SUBSTRATE
BASED ON MEASURED FLOW RATE OF SLURRY AND TARGET FLOW RATE

FIG. 10

# EUROPEAN SEARCH REPORT

**Application Number**

EP 24 21 6468

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 116 833 054 A (NANJING GUOXUAN BATTERY CO LTD) 3 October 2023 (2023-10-03) | 1,2,6, 9-12,14, 15 | INV. B05C11/10 H01M4/04 |
| Y | * page 3 - page 5 * | 7,8 | |
| A | * figure 1 * | 13 | ADD. B05C5/02 |
| | ----- | | |
| X | JP 2012 016656 A (PANASONIC CORP) 26 January 2012 (2012-01-26) * paragraph [0013] - paragraph [0039] * * figures * | 1-5,9 | |
| | ----- | | |
| Y | CN 218 517 084 U (ZHONGXINHANG TECHNOLOGY CO LTD) 24 February 2023 (2023-02-24) * page 5 - page 7 * * figure 3 * | 7,8 | |
| | ----- | | |

**TECHNICAL FIELDS SEARCHED (IPC)**

B05C
H01M

The present search report has been drawn up for all claims

| Place of search | Date of completion of the search | Examiner |
|---|---|---|
| The Hague | 8 May 2025 | Roldán Abalos, Jaime |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 21 6468

This annex lists the patent family members relating to the patent documents cited in the above-mentioned European search report.
The members are as contained in the European Patent Office EDP file on
The European Patent Office is in no way liable for these particulars which are merely given for the purpose of information.

08-05-2025

| Patent document cited in search report | | Publication date | Patent family member(s) | Publication date |
|---|---|---|---|---|
| CN 116833054 | A | 03-10-2023 | NONE | |
| JP 2012016656 | A | 26-01-2012 | NONE | |
| CN 218517084 | U | 24-02-2023 | NONE | |

EPO FORM P0459

For more details about this annex : see Official Journal of the European Patent Office, No. 12/82